# EUROPÄISCHE PATENTSCHRIFT

(11) **EP 4 242 531 B1**
(45) Veröffentlichungstag und Bekanntmachung des Hinweises auf die Patenterteilung: **23.10.2024**
(21) Anmeldenummer: 23188728.2
(22) Anmeldetag: 01.07.2019
(51) Int. Cl.: F24D 3/10, F24D 19/00, E03B 7/12, F16K 17/40

(54) **FROSTSCHUTZVORRICHTUNG FÜR WASSERVERSORGUNGSVORRICHTUNG IN FREIZEITFAHRZEUGEN**
FROST PROTECTION DEVICE FOR WATER SUPPLY APPARATUS IN RECREATIONAL VEHICLES
DISPOSITIF ANTIGEL POUR DISPOSITIF D'ALIMENTATION EN EAU DANS UN VÉHICULE DE LOISIR

(30) Priorität: 02.07.2018 DE 102018115980
(43) Veröffentlichungstag der Anmeldung: 13.09.2023
(62) Teilanmeldung aus: 19736337.7
(73) Patentinhaber: Truma Gerätetechnik GmbH & Co. KG, 85640 Putzbrunn (DE)
(72) Erfinder: MAACK, Frank, 85640 Putzbrunn (DE); WEBER, Michael, 85640 Putzbrunn (DE)
(74) Vertreter: Müller Hoffmann & Partner

(56) Entgegenhaltungen:
- EP-A1- 0 684 429
- EP-A2- 2 607 811
- DE-A1- 2 116 046
- DE-U1- 202013 006 209
- GB-A- 1 221 254

## Beschreibung

Die Erfindung betrifft eine Wasserversorgungsvorrichtung, insbesondere eine Wasserversorgungsvorrichtung für Freizeitfahrzeuge.

Derartige Wasserversorgungsvorrichtungen sind zum Beispiel mit einem Wassererwärmer ausgestattet, der als Durchlauferhitzer ausgestaltet sein kann und zum Erwärmen von Wasser für sanitäre Zwecke genutzt wird. Üblicherweise weist ein derartiger Wassererwärmer eine Wärmequelle, zum Beispiel einen Gasbrenner oder eine Elektroheizung, sowie einen Wärmetauscher auf. Der Wärmetauscher wird durch die Wärmequelle beheizt und von dem Wasser durchströmt, wodurch das Wasser erwärmt wird.

Die Erwärmung des Wassers im Wärmetauscher kann gewissen Schwankungen unterliegen, zum Beispiel durch ein zyklisches Betreiben der Wärmequelle, insbesondere bei einem Gasbrenner. Dementsprechend kann es während des Betriebs eines derartigen Wassererwärmers auch zu Schwankungen der Auslauftemperatur an den Zapfstellen kommen. Für den Benutzer sind dabei insbesondere Auslauftemperaturspitzen unangenehm, weil er in Kontakt mit zu heißem Wasser gelangen kann.

Zur Lösung dieses Problems ist in der DE 20 2013 006 208 U1 eine Druckausgleichs- und Mischvorrichtung beschrieben, mit der es möglich ist, das von dem Wassererwärmer erwärmte Wasser nachfolgend zu durchmischen. Auf diese Weise kann es erreicht werden, dass lokal heißeres Wasser mit im System (z. B. der Mischvorrichtung) vorhandenem kühlerem Wasser vermischt wird, sodass sich insgesamt die Temperatur vergleichmäßigt. Die Mischvorrichtung stellt insbesondere einen Mischbehälter bereit, in dem die Durchmischung des vorher durch den Wassererwärmer (Wassererhitzer) strömenden Wassers erfolgt.

Zudem kann gemäß der DE 20 2013 006 208 U1 eine Druckausgleichseinrichtung vorgesehen sein, die den Druck im Wasser begrenzt, um eine Beschädigung der Komponenten der Wasserversorgungseinrichtung zu vermeiden. Die Begrenzung oder Harmonisierung des Drucks kann zum Beispiel zweckmäßig sein, um Druckspitzen, die sich bei einer starken Erwärmung des Wassers ergeben, zu kompensieren. Gerade dann, wenn das Wasservolumen insgesamt klein ist, kann eine stärkere Erwärmung des Wassers zu einer entsprechenden Ausdehnung und damit einem starken Druckanstieg führen, der durch die in der DE 20 2013 006 208 U1 beschriebene Druckausgleichseinrichtung ausgeglichen wird.

Die somit aus der DE 20 2013 006 208 U1 vorbekannte Wasserversorgungseinrichtung hat sich in der Praxis hervorragend bewährt und den Komfort für den Benutzer durch eine gleichmäßige Versorgung mit warmem Wasser erhöht.

Die Wasserversorgungsvorrichtung kann insbesondere in Freizeitfahrzeugen wie Reisemobilen etc. eingesetzt werden, um eine komfortable Bereitstellung von warmem Wasser zu ermöglichen. Für derartige Freizeitfahrzeuge ist es üblich, das Wasser aus der gesamten Wasserversorgungseinrichtung vor Beginn der kalten Jahreszeit abzulassen, um ein Einfrieren der Anlage zu vermeiden. Im Falle eines Frierens des noch in der Anlage befindlichen Wassers besteht nämlich die Gefahr, dass durch die frostbedingte Ausdehnung des gefrorenen Wassers (Eisbildung) Beschädigungen der Anlage (der Wasserversorgungsvorrichtung) bewirkt werden. Zum Beispiel können Hohlräume, Leitungen, Verbindungen etc. durch die Eisbildung gesprengt werden.

Die Benutzer derartiger Anlagen sind es daher gewohnt, das Wasser abzulassen, wenn zu befürchten ist, dass die Anlage bzw. das Freizeitfahrzeug Frost ausgesetzt wird.

Wenn der Bediener es jedoch versäumt, das Wasser vollständig abzulassen, besteht ein Risiko, dass durch das nachfolgende Einfrieren des noch in der Anlage befindlichen Wassers eine Beschädigung bewirkt wird, die entsprechend teure Reparatur- und Austauscharbeiten erforderlich machen kann.

Aus der DE 21 16 046 A1 ist eine Sollbruchscheibe bekannt, die aus einem biegsamen wärmeleitenden Metallblech hergestellt ist und sich schneidende Kerblininen aufweist.

Der Erfindung liegt die Aufgabe zugrunde, eine Wasserversorgungsvorrichtung anzugeben, bei der mögliche Schäden durch ein Einfrieren des in der Anlage noch befindlichen Wassers möglichst gering gehalten werden.

Die Aufgabe wird erfindungsgemäß durch eine Wasserversorgungsvorrichtung mit den Merkmalen von Anspruch 1 gelöst. Ausgestaltungen der Erfindung sind in den abhängigen Ansprüchen angegeben.

Es wird eine Wasserversorgungsvorrichtung angegeben, wobei eine Mischvorrichtung vorgesehen ist, zum Durchmischen von in der Mischvorrichtung geführtem Wasser in einem Mischbehälter. Relativ zum Mischbehälter ist eine Sockelvorrichtung angeordnet, die eine Sockelkammer aufweist, die in hydraulischer Verbindung zu einer Wasserleitung der Wasserversorgungseinrichtung steht und die eine Öffnung zur Umgebung hin aufweist. Eine Dichteinrichtung ist in die Sockelkammer eingesetzt, zum Verschließen der Öffnung der Sockelkammer gegenüber der Umgebung. Die Dichteinrichtung weist einen Sollbruch-Wandbereich auf, der eine Druckfestigkeit aufweist, die niedriger ist als die Druckfestigkeit von Wandbereichen anderer Komponenten der Wasserversorgungsvorrichtung, die im Betriebszustand mit Wasser befüllbare Hohlräume umschließen und die diese mit Wasser befüllbaren Hohlräume gegenüber der Umgebung abgrenzen.

Die Dichteinrichtung kann - beispielsweise je nach Ausgestaltung in Verbindung mit weiteren Bauteilen wie Dichtelementen (z. B. mindestens einem O-Ring oder mindestens einem Dichtformteil) - in einem in die Sockelkammer eingesetzten Zustand zum Abdichten der Sockelkammer gegenüber der Umgebung dienen.

Insbesondere kann die Sockelvorrichtung unterhalb des Mischbehälters angeordnet sein.

Insbesondere kann die Druckfestigkeit des Sollbruch-Wandbereichs sogar niedriger als die Druckfestigkeit von Wandbereichen aller anderen Wasser führenden Komponenten der Wasserversorgungsvorrichtung sein.

Die Mischvorrichtung kann insbesondere eine Mischvorrichtung sein, wie sie in der DE 20 2013 006 208 U1 beschrieben ist. Beispielsweise unterhalb des Mischbehälters, also auf einem tiefer gelegenen Niveau, kann die Sockelvorrichtung mit der Sockelkammer vorgesehen sein. Dementsprechend besteht die hohe Wahrscheinlichkeit, dass sich Wasser, das sich z. B. bei einem Ablassen des Wassers noch in der Wasserversorgungsvorrichtung befindet, jedenfalls auch in der Sockelkammer sammelt, die dementsprechend an eine Wasserleitung der Wasservorrichtung angeschlossen ist.

Die Sockelkammer selbst ist zur Umgebung hin geöffnet. Diese Öffnung wird durch die Dichteinrichtung verschlossen, sodass die Sockelkammer im Betriebszustand zur Umgebung hin abgeschlossen ist.

Die Dichteinrichtung kann insbesondere als "Stopfen" zum Verschließen der Sockelkammer und damit der Wasserversorgungsvorrichtung dienen. Bei einem Entfernen der Dichteinrichtung aus der Sockelkammer und damit Freigeben der Öffnung der Sockelkammer kann das in der Wasserversorgungsvorrichtung befindliche Wasser über die Sockelkammer in die Umgebung ausfließen. Entsprechende Leitungen oder Wasserführungen können vorgesehen werden, um ein geordnetes Ablaufen des Wassers zu gewährleisten. Auf diese Weise kann das Wasser bestimmungsgemäß vor Beginn einer Frostperiode aus der Wasserversorgungsvorrichtung abgelassen werden. Danach kann die Dichteinrichtung wieder in die Sockelkammer eingesetzt werden, um die Sockelkammer wieder zu verschließen. Da jedoch - insbesondere bei einer zu kurzen Ablaufzeit - immer noch Wasser in die Sockelkammer nachlaufen kann, besteht trotz eines überwiegenden Entleerens der Wasserversorgungsvorrichtung noch das Risiko eines Frostschadens, wenn dieses restliche, sich in der Sockelkammer sammelnde Wasser im Frostfall einfriert.

Zur Lösung dieses Problems ist in der Dichteinrichtung der Sollbruch-Wandbereich vorgesehen, der eine niedrige Druckfestigkeit aufweist. Sollte sich daher im Inneren der Sockelkammer und damit im Inneren der Wasserversorgungsvorrichtung ein entsprechend hoher Druck bilden, zum Beispiel durch Einfrieren des Wassers und damit verbundene Eisbildung, kann gezielt ein Brechen des Sollbruch-Wandbereichs erreicht werden, da die anderen Komponenten der Wasserversorgungsvorrichtung eine höhere Festigkeit aufweisen. Letzteres gilt insbesondere für die Wandbereiche der Komponenten, die Wasser in Hohlräumen (Leitungen, Kammern etc.) führen und diese Hohlräume gegenüber der Umgebung abgrenzen. Diese Wandbereiche sind prinzipbedingt gefährdet, wenn das Wasser einfriert.

Nach einem Brechen des Sollbruch-Wandbereichs ist die Sockelkammer wieder zur Umgebung hin geöffnet, sodass sich das im Inneren der Sockelkammer befindende Wasser bzw. Eis zur Umgebung hin ausdehnen kann, wodurch eine weitere Druckerhöhung und damit möglicherweise Zerstörung weiterer Komponenten verhindert wird.

Die genannte Wasserleitung der Wasserversorgungsvorrichtung kann zum Beispiel eine Verbindung zu einem Vorratstank des Freizeitfahrzeugs oder einem öffentlichen Wasserversorgungsnetz umfassen. Ebenso ist es aber auch möglich, dass die Wasserleitung andere Funktionen einnimmt. Beispielsweise kann die Wasserleitung zu oder von dem Wassererwärmer (Wärmetauscher) oder zu einem Verbraucher führen.

Der Sollbruch-Wandbereich in der Dichteinrichtung dient somit einer Frostschadenverhinderung bzw. einem Frostschutz.

Das Festigkeitskriterium der "Druckfestigkeit" kann auch als Bruchfestigkeit verstanden werden. Die Druckfestigkeit bzw. Bruchfestigkeit ist dabei insbesondere von der Wandstärke und dem Wandmaterial abhängig. Eine niedrige Bruch- bzw. Druckfestigkeit kann auch durch lokale Maßnahmen erreicht werden, zum Beispiel durch eine gezielte Schwächung des Materials im Bereich des Sollbruch-Wandbereichs.

Insbesondere kann der Sollbruch-Wandbereich als Trennwand zwischen dem Inneren der Wasserversorgungsvorrichtung (hier: der Sockelkammer) und der Umgebung ausgebildet sein.

Der Sollbruch-Wandbereich kann derart dimensioniert sein, dass dann, wenn wenigstens einer der Hohlräume der Wasserversorgungsvorrichtung mit einfrierendem Wasser befüllt ist, der Sollbruch-Wandbereich bricht, bevor eine andere Komponente der Wasserversorgungsvorrichtung bricht. Auf diese Weise kann durch das "Opfer" des Sollbruch-Wandbereichs erreicht werden, dass der Schaden verhältnismäßig klein bleibt, weil weitere Komponenten geschützt werden, deren Austausch bzw. Reparatur möglicherweise erheblich aufwendiger und teurer wäre.

Der Mischbehälter kann eine Mischkammer umschließen, wobei im unteren Bereich der Mischkammer eine Öffnung vorgesehen sein kann, die die Mischkammer mit der Sockelkammer verbindet, und wobei bei eingesetzter Dichteinrichtung die Öffnung zur Sockelkammer verschlossen ist. Das Wasser aus der Mischkammer kann dann über die Öffnung und die Sockelkammer ausgelassen werden, wenn die Dichteinrichtung entfernt wird. Durch die Dichteinrichtung alleine (mithin bedingt durch die Formgestalt der Dichteinrichtung) oder in Verbindung mit Dichtelementen, z. B. O-Ringen oder Formdichtungen, kann bei eingesetzter Dichteinrichtung die Öffnung insbesondere dicht zur Sockelkammer verschlossen sein.

Die Dichteinrichtung kann auswechselbar in die Sockelkammer eingesetzt sein. Insbesondere sollte die Dichteinrichtung dabei zerstörungsfrei auswechselbar, zum Beispiel ähnlich einem Stopfen einsteckbar sein. An der Dichteinrichtung können Dichtungen vorgesehen sein, um die Fugen zwischen der Dichteinrichtung und der Sockelkammer beim Einstecken der Dichteinrichtung abzudichten.

Die Dichteinrichtung weist eine Filteraufnahme auf, zum Aufnehmen und Halten eines Wasserfilters. Damit ist es möglich, insbesondere das Wasserfilter in einem Wasserstrom zu halten, der zum Beispiel von außen in die Wasserversorgungsvorrichtung eingebracht wird. Das Wasserfilter kann zum Beispiel in Form von Kartuschen, Tabletten etc. bereitgestellt werden. Durch das Durchströmen des Wasserfilters kann die Wasserqualität verbessert werden.

Die Sockelvorrichtung kann einen Einlass und einen Auslass zum Durchführen von Wasser durch die Sockelkammer aufweisen. Zudem kann eine Filterkammer vorgesehen sein, die in der Sockelvorrichtung strömungsmäßig zwischen dem Einlass und dem Auslass angeordnet ist und einen Teil der Sockelkammer bildet. Dabei kann die Filteraufnahme derart in der Filterkammer angeordnet sein, dass das von der Filteraufnahme aufgenommene Wasserfilter in der Filterkammer gehalten wird. Das Wasserfilter wird dann von dem durch die Filterkammer und die Filteraufnahme strömende Wasser durchströmt. Das Wasser wiederum kann über eine Leitung aus dem öffentlichen Netz oder aber auch aus einem Vorratsbehälter bezogen werden. Die Filterkammer kann zudem seitliche Durchbrüche oder Aussparungen aufweisen, durch die das Wasser passieren kann.

Bei einer Ausführungsform ist der Sollbruch-Wandbereich an die Filteraufnahme angrenzend vorgesehen.

Bei einer Ausgestaltung weist die Dichteinrichtung eine längliche Erstreckung auf, sowie zusätzlich zu der Filteraufnahme eine in Längsrichtung koaxial zu der Filteraufnahme zur Umgebung hin offene Umgebungskammer. Dabei kann der Sollbruch-Wandbereich zwischen der Filteraufnahme und der Umgebungskammer angeordnet sein. Die längliche Erstreckung der Dichteinrichtung ermöglicht somit eine axiale Anordnung der Filteraufnahme und der Umgebungskammer, wobei der Sollbruch-Wandbereich axial dazwischen angeordnet ist. Die sogenannte Umgebungskammer muss dabei keine großvolumige Kammer sein. Sie kann auch direkt die Außenwand bilden, die in diesem Fall mit dem Sollbruch-Wandbereich identisch sein.

Die Filteraufnahme kann eine zylindrische Form aufweisen. Dabei kann die Grundfläche des Zylinders kreisförmig, oval oder mehreckig sein. Weiterhin kann der Sollbruch-Wandbereich eine Stirnseite der zylindrischen Filteraufnahme bilden. Somit kann der Sollbruch-Wandbereich beispielsweise kreisförmig oder oval sein. Der Sollbruch-Wandbereich kann überdies eine Zwischen- oder Übergangskomponente sein, an der sich z. B. ein weiterer Abschnitt der Dichteinrichtung (z. B. die vorgenannte Umgebungskammer) anschließt. Die zylindrische Form hat beispielsweise den Vorteil, dass sich Eis verstärkt entlang einer Längsachse der Zylinders ausbilden und daher bevorzugt gegen den stirnseitigen Sollbruch-Wandbereich anstoßen wird.

Der Sollbruch-Wandbereich kann eine Schwächung aufweisen, die darin bestehenden kann, dass es sich um eine reduzierte Wandstärke in Relation zu den Wandstärken der anderen Abschnitte handelt, die die Filteraufnahme bilden bzw. diesen zugehörigen Aufnahmeraum umschließen. Der Sollbruch-Wandbereich kann daher darin bestehen, dass an einer Stelle die Wandstärke gezielt reduziert ist. In einer Variante umgibt die Schwächung die Stirnseite und/oder ist die Schwächung ein Teil der Stirnseite der zylindrischen Filteraufnahme.

Die Dichteinrichtung kann insbesondere einteilig ausgeführt sein. Zum Beispiel kann es sich dabei um ein Kunststoffteil, ein Kunststoffspritzgussteil etc. handeln.

Wird als Werkstoff Kunststoff verwendet, so wird die vorgenannte Schwächung beispielsweise direkt beim Spritzen erzeugt oder es wird nachträglich mechanisch oder durch Wärme Material gezielt im Bereich der Schwächung abgetragen.

Bei einer Variante kann die Dichteinrichtung mehrteilig ausgeführt sein, wobei der Sollbruch-Wandbereich mit weiteren Komponenten zur Bildung der Dichteinrichtung zusammengefügt ist. Insbesondere können zum Beispiel mehrere Hülsen oder Hohlelemente zusammengeschraubt oder -gesteckt werden und dabei den Sollbruch-Wandbereich zwischen sich einschließen. Der Sollbruch-Wandbereich kann dann in der Dichteinrichtung auswechselbar eingebaut werden. Auf diese Weise kann der Sollbruch-Wandbereich in der Art einer eingebauten Berstscheibe ausgebildet sein.

Die Mischvorrichtung kann insbesondere eine Druckausgleichs- und Mischvorrichtung sein, wobei die Druckausgleichs-Mischvorrichtung eine Mischeinrichtung und eine Druckausgleichseinrichtung aufweist. Die Mischeinrichtung kann zum Durchmischen des in der Mischeinrichtung geführten Wassers dienen, während die Druckausgleichseinrichtung zum Begrenzen des Druckanstiegs in dem Wasser dienen kann. Die Mischeinrichtung und die Druckausgleichseinrichtung können in einer Behältereinheit integriert sein und ein gemeinsames, das Wasser aufnehmendes und führendes Gehäuse aufweisen. Ein Beispiel für eine derartige Druckausgleichs- und Mischvorrichtung ist in der DE 20 2013 006 208 U1 beschrieben. Dort ist die Mischeinrichtung als Drallmischeinrichtung ausgebildet.

Die Druckausgleichseinrichtung kann wenigstens teilweise im Inneren der Mischeinrichtung angeordnet sein, wobei die Mischeinrichtung ein Wasser aufnehmendes Mischvolumen aufweist und die Druckausgleichseinrichtung ein Luft aufnehmendes Druckausgleichsvolumen aufweist. Dabei können das Mischvolumen und das Druckausgleichsvolumen aneinander angrenzen und wenigstens teilweise durch eine gemeinsame Trennwand voneinander getrennt sein.

Die Dichteinrichtung kann teilweise oder vollständig aus einem Kunststoff bestehen.

Weiterhin kann die Dichteinrichtung aus einem temperaturbeständigen und/oder einem trinkwassertauglichen Material bestehen oder zumindest eine trinkwassertaugliche Oberfläche aufweisen.

Der Sollbruch-Wandbereich kann eine Druckfestigkeit bis zu einem maximalen Bereich zwischen 2400 kPA und 3500 kPA aufweisen. Der Sollbruch-Wandbereich wiedersteht somit beispielsweise Drücken bis zu einem Bereich zwischen 2400 kPA und 3500 kPA.

Für die Gestaltung des Sollbruch-Wandbereichs sind verschiedene Möglichkeiten denkbar. So kann der Sollbruch-Wandbereich eine Schwächung in Form einer reduzierten Wandstärke gegenüber anderen, die Dichteinrichtung bildenden Abschnitten aufweisen, wobei die Schwächung derart dimensioniert sein kann, dass die Schwächung eine niedrigere Druckfestigkeit aufweist als alle anderen Wasser führenden Komponenten der Wasserversorgungsvorrichtung.

Dabei kann der Sollbruch-Wandbereich ein Wandelement aufweisen, wobei die Schwächung bei einer Variante eine Nut aufweisen kann, die das Wandelement vollständig umläuft.

Bei einer anderen Variante kann die Schwächung eine Nut aufweisen, die das Wandelement nur teilweise umläuft, derart, dass das Wandelement über einen Steg mit einem den Sollbruch-Wandbereich umgebenden Bereich der Dichteinrichtung verbunden ist. Der Steg kann einerseits dazu dienen, bei einem Brechen des Sollbruch-Wandbereichs das Wandelement an der restlichen Dichteinrichtung zu halten. Anderseits ermöglicht der Steg in einem Fall, in dem die Dichteinrichtung als Kunststoff-Spritzgussteil gefertigt wird, dass der fließfähige Kunststoff bei der Herstellung des Teils besser fließen kann.

Diese und weitere Vorteile und Merkmale werden nachfolgend anhand eines Beispiels unter Zuhilfenahme der begleitenden Figuren näher erläutert. Es zeigen:
- **Fig. 1**: einen Schnitt durch ein Beispiel für eine Wasserversorgungsvorrichtung mit einer Mischvorrichtung; und
- **Fig. 2**: einen Schnitt durch eine Dichteinrichtung, die in die Wasserversorgungsvorrichtung von Fig. 1 einsetzbar ist; und
- **Fig. 3**: eine Variante mit einer anderen Gestaltung eines SollbruchWandbereichs.

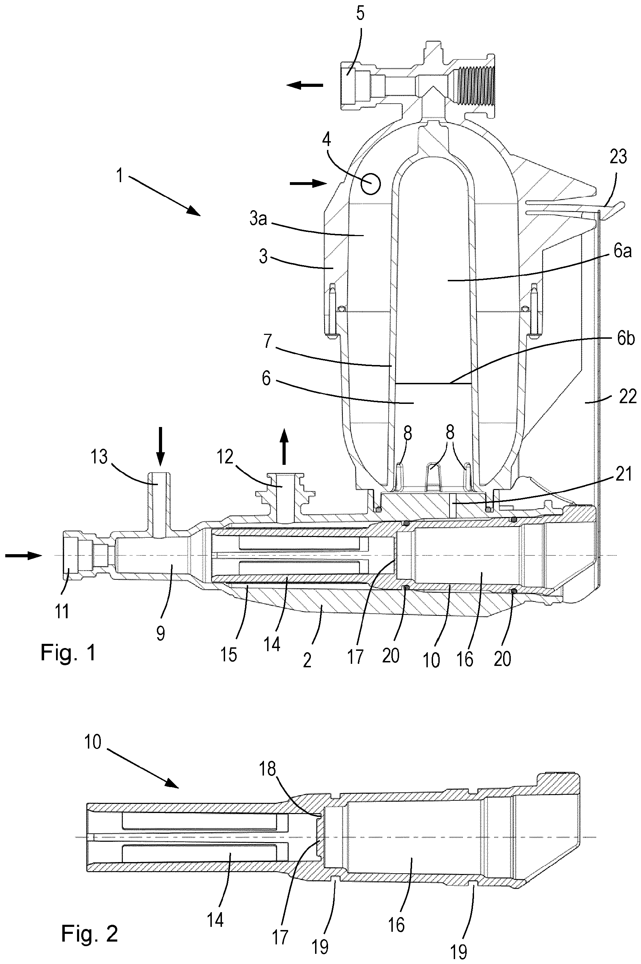

Fig. 1 zeigt eine erfindungsgemäße Wasserversorgungsvorrichtung. Die Wasserversorgungsvorrichtung kann Teil einer größeren Anlage sein, die unter anderem zum Beispiel einen Wassererhitzer (Elektro oder Gas) sowie entsprechende Leitungen, Wärmetauscher etc. aufweisen kann.

Die hier zu erläuternde Wasserversorgungsvorrichtung weist insbesondere eine als Druckausgleichs- und Mischvorrichtung ausgebildete Mischvorrichtung 1 sowie eine unterhalb der Mischvorrichtung 1 angeordnete Sockelvorrichtung 2 auf.

Die Mischvorrichtung 1 weist einen Mischbehälter 3 auf, mit einem Einlass 4 und einem Auslass 5. Der Einlass 4 ist im oberen Bereich des Mischbehälters 3 vorgesehen, wobei er tangential angeordnet ist, sodass über dem Einlass 4 einströmendes Wasser im Inneren des Mischbehälters 3 einer drall- bzw. schraubenförmigen Strömung folgt. Die Pfeile symbolisieren die Strömungsrichtung des Wassers an Einlass 4 und Auslass 5.

Der Mischbehälter 3 umschließt eine Mischkammer 3a. Im Inneren der Mischkammer 3a ist eine Druckausgleichseinrichtung 6 vorgesehen, die eine kuppel- bzw. domartige Wandung 7 aufweist. Die Wandung 7 ist nach oben geschlossen, während sie im unteren Bereich Öffnungen 8 aufweist, über die das Innere der Wandung 7 mit dem Inneren des Mischbehälters 3 bzw. der Mischkammer 3a in kommunizierender Verbindung steht.

Wenn Wasser über den Einlass 4 eingelassen wird, wird die Luft im Inneren der Wandung 7 eingeschlossen und bei steigendem Wasserdruck zunehmend komprimiert. Aufgrund der kuppelartigen Struktur der Wandung 7 kann die Luft nicht entweichen, sodass sich oberhalb eines Wasserpegels 6b ein eingeschlossenes Luftvolumen 6a bildet. Auf diese Weise ist bei schwankenden Wasserdrücken eine Volumenkompensation möglich, die zu einer Vergleichmäßigung des Drucks und insbesondere zu einem Abbau von Druckspitzen führt.

Die Wirkungsweise der Druckausgleichseinrichtung 6 ist auch in der DE 20 2013 006 208 U1 ausführlich beschrieben, sodass sich an dieser Stelle eine detailliertere Erörterung erübrigt.

Das über den Einlass 4 eintretende Wasser strömt drall- bzw. schraubenförmig um die domförmige Wandung 7 herum und wird gleichmäßig durchgemischt, was zu einer Vergleichmäßigung der Temperatur führt. Das durchmischte Wasser tritt dann senkrecht nach oben aus der Mischkammer 3a über den Auslass 5 aus und kann über eine nicht dargestellte Leitung zu einem Verbraucher geführt werden.

Die unterhalb des Mischbehälters 3 angesetzte Sockelvorrichtung 2 weist eine große Sockelkammer 9 auf, in die eine längliche Dichteinrichtung 10 eingesteckt ist, um die Sockelkammer 9 gegenüber der Umgebung abzuschließen. Die Sockelkammer 9 ist über verschiedene Öffnungen mit Wasser führenden Komponenten verbunden. So ist stirnseitig zu der Sockelkammer ein Wassereinlass 11 vorgesehen, über den Wasser aus einem Frischwassertank oder dem öffentlichen Netz in die Sockelkammer 9 einströmen kann (vgl. Pfeilrichtung). Das Wasser wird anschließend über einen Wasserauslass 12 wieder abgeführt und zum Beispiel zu einem Wärmetauscher (nicht dargestellt) als Teil einer Wasserheizung (ebenfalls nicht dargestellt) geleitet, wo das Wasser nachfolgend erwärmt werden kann. Das erwärmte Wasser gelangt dann nach Durchströmen des Wärmetauschers über den Einlass 4 in den Mischbehälter 3, wird dort in der Mischkammer 3a durchmischt und über den Auslass 5 abgeführt, sodass es schließlich zum Verbraucher, z. B. einer Dusche in einem Freizeitfahrzeug, gelangen kann.

An der Sockelkammer 9 ist weiterhin ein Rückführeinlass 13 vorgesehen, über den Wasser bei einem Zirkulationsbetrieb rückgeführt werden kann.

Somit wird die Sockelvorrichtung 2 mit der Sockelkammer 9 im Betrieb von Wasser durchströmt.

Fig. 2 zeigt die Dichteinrichtung 10 als Einzelteil. Die Dichteinrichtung 10 hat im Wesentlichen eine zylindrische Form. Insbesondere der hier in der Darstellung linke Abschnitt ist zylindrisch.

An einer Stirnseite der Dichteinrichtung 10 ist eine Filteraufnahme 14 ausgebildet, in die ein Wasserfilter, zum Beispiel eine Filterkartusche oder Filtertabletten einsetzbar sind. Zur besseren Darstellung sind das Wasserfilter bzw. die Filterelemente in den Figuren nicht gezeigt.

Die Dichteinrichtung 10 mit der Filteraufnahme 14 ist derart dimensioniert, dass die Filteraufnahme 14 das Wasserfilter in einer Filterkammer 15 hält, die wiederum Teil der Sockelkammer 9 ist (Fig. 1). Damit hält die Dichteinrichtung 10 das Wasserfilter an dem dafür vorgesehenen Ort (Filterkammer 15) in der Sockelkammer 9.

Stirnseitig zu der Filteraufnahme 14 ist in der Dichteinrichtung 10 eine Umgebungskammer 16 ausgebildet, die zur Umgebung hin offen ist. Die Umgebungskammer 16 ist in dem gezeigten Beispiel relativ groß dimensioniert. Sie kann aber auch wesentlich kleiner ausgebildet sein. Bei einer nicht dargestellten Variante der Dichteinrichtung 10 ist die Umgebungskammer 16 gar nicht vorhanden, sodass die zur Umgebung gerichtete Außenseite der Dichteinrichtung 10 im Wesentlichen bündig verläuft.

Zwischen der Filteraufnahme 14 und der Umgebungskammer 16 ist ein Sollbruch-Wandbereich 17 vorgesehen, der somit das Innere der Sockelvorrichtung 2, nämlich die Sockelkammer 9 mit der Filterkammer 15 gegenüber der Umgebungskammer 16 und damit der Umgebung abgrenzt. Der Sollbruch-Wandbereich 17 bildet somit eine Trennwand zwischen der Sockelkammer 9 und der Umgebung.

In Fig. 1 ist der Sollbruch-Wandbereich 17 als gleichförmiges dünnes Wandelement eingezeichnet.

Demgegenüber zeigt Fig. 2 eine Variante, bei der der Sollbruch-Wandbereich 17 eine gezielte ringförmige Schwächung 18 aufweist.

In beiden Fällen weist der Sollbruch-Wandbereich 17 eine Druckfestigkeit auf, die niedriger ist, als die der anderen durch Wasser beaufschlagten Komponenten. Die Wandstärke des Sollbruch-Wandbereichs 17 an der schwächsten Stelle ist dementsprechend gering. In einer Ausgestaltung toleriert der Sollbruch-Wandbereich 17 Drücke bis zu einem Bereich zwischen 2400 kPA und 3500 kPA.

Zwischen dem Inneren des Mischbehälters 3 bzw. der Mischkammer 3a und der Sockelkammer 9 ist eine Verbindungsöffnung 21 vorgesehen, über die Wasser aus der Mischkammer 3a in die Sockelkammer 9 abfließen kann. Diese Verbindungsöffnung 21 ist insbesondere hilfreich, um bei einem Außerbetriebsetzen der Anlage das Wasser vollständig ablassen zu können, um ein späteres Einfrieren von Wasser zu vermeiden.

Die Dichteinrichtung 10 weist zwei umlaufende Nuten 19 auf, in die O-Ringe 20 eingelegt werden können. Die Nuten 19 bzw. O-Ringe 20 sind derart dimensioniert, dass bei einem Einschieben der Dichteinrichtung 10 in die Sockelkammer 9 eine Dichtwirkung erzielt wird. So kann bei eingesetzter Dichteinrichtung 10 weder Wasser aus der Sockelkammer 9 noch (über die Verbindungsöffnung 21) Wasser aus dem Mischbehälter 3 austreten.

Wenn somit die Dichteinrichtung 10 in die Sockelkammer 9 eingeschoben ist, wird auch die Verbindungsöffnung 21 zwischen dem Mischbehälter 3 und der Sockelkammer 9 verschlossen. Wenn jedoch die Dichteinrichtung 10 aus der Sockelkammer 9 herausgezogen ist, kann das gesamte Wasser aus der Sockelkammer 9 abfließen. Zudem kann auch das noch im Mischbehälter 3 befindliche Wasser über die Verbindungsöffnung 21 ausgelassen werden und zur Umgebung hin abfließen.

Zum leichteren Herausziehen der Dichteinrichtung 10 ist ein Hebel 22 vorgesehen, der seinerseits durch einen Riegel 23 gegen unbeabsichtigtes Lösen gesichert wird. In Fig. 1 ist der Hebel 22 in geschlossener Stellung gezeigt. Bei einem Herabschwenken den Hebels 22 wird die mit dem Hebel 22 verbundene Dichteinrichtung 10 aus der Sockelkammer 9 herausgezogen und kann nachfolgend leicht entnommen werden. Das in der Sockelkammer 9 bzw. der weiteren Anlage befindliche Wasser läuft dann aus.

Umgekehrt kann eine neu in die Sockelkammer 9 eingesetzte Dichteinrichtung 10 durch ein Hochschwenken des Hebels 22 in die Sockelkammer 9 in ihre vorgesehen Position eingedrückt werden, um die Sockelkammer 9 zur Umgebung hin abzudichten.

Durch die Dimensionierung bzw. Schwächung des Sollbruch-Wandbereichs 17 kann erreicht werden, dass dieser ähnlich einer Berstscheibe wirkt. Bei einer Erhöhung des Innendrucks in der Sockelkammer 9, zum Beispiel durch die Volumenvergrößerung von einfrierendem Wasser, kann bei Übersteigen der Druckfestigkeit des Sollbruch-Wandbereichs 17 dieser brechen, wodurch der Druck zur Umgebung hin abgebaut werden kann. Insbesondere kann das einfrierende oder bereits gefrorene Wasser sich in Richtung zur Umgebung hin ausdehnen. Der Sollbruch-Wandbereich 17 dient somit als "Opfer", um andere Komponenten vor Frostschäden zu schützen.

Als Reparaturmaßnahme muss dann lediglich die Dichteinrichtung 10 ausgetauscht werden. Das Risiko für weitere Frostschäden an Komponenten der Wasserversorgungsvorrichtung, aber auch in der gesamten weiteren Anlage, ist deutlich reduziert. Dies gilt insbesondere dann, wenn die Sockelkammer 9 sich auf dem tiefsten Niveau der gesamten Anlage befindet, sodass sich sämtliches Wasser bzw. Restwasser in der Sockelkammer 9 sammeln wird.

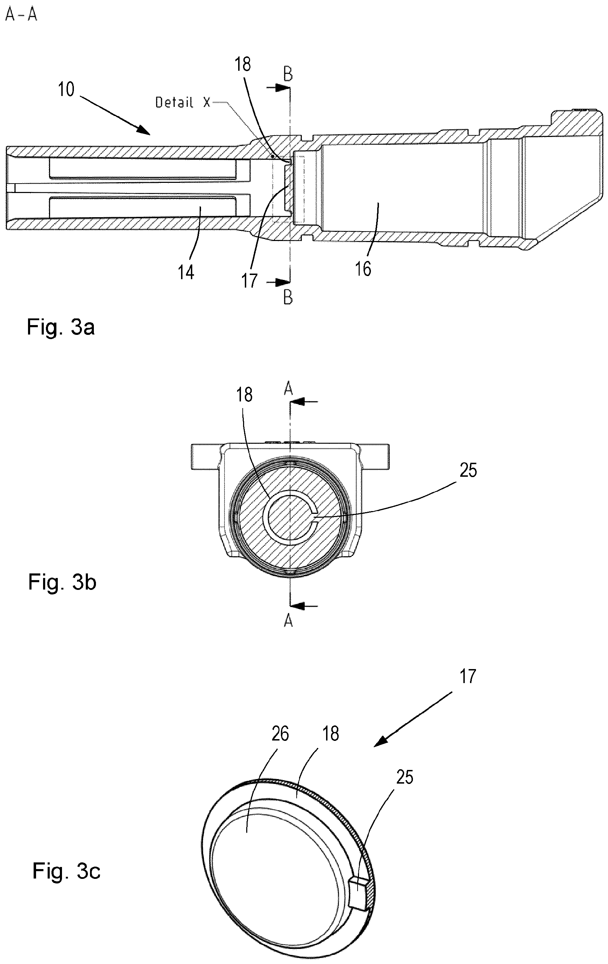

Fig. 3 zeigt gegenüber der Fig. 2 eine Variante für eine Gestaltung des Sollbruch-Wandbereichs 17. Dabei zeigt Fig. 3a einen Längsschnitt analog zu Fig. 2. Fig. 3b zeigt einen Vertikalschnitt entlang der Linie B-B in Fig. 3a. Fig. 3c zeigt das in Fig. 3a mit X gekennzeichnete Detail in einer Perspektivansicht.

Während bei der Variante von Fig. 2 die Schwächung 18 als umlaufende Nut ausgebildet ist, ist bei der Variante von Fig. 3 die Schwächung 18 nur als teilweise umlaufende Nut ausgebildet. In dem Bereich, in dem die Schwächung 18 nicht als Nut umläuft, ist ein Steg 25 ausgebildet. Der Sollbruch-Wandbereich 17 wird dabei durch die Schwächung 18, den Steg 25 und ein von der Schwächung 18 umlaufenes Wandelement 26 gebildet (Fig. 3c).

Der Steg 25 ermöglicht, dass bei einer Herstellung der Dichteinrichtung 10 als Kunststoff-Spritzgussteil fließfähiger Kunststoff zuverlässig auch in den Bereich des Sollbruch-Wandbereichs 17 fließen kann. Der Bereich der Schwächung 18 könnte unter Umständen einen zu geringen Querschnitt aufweisen, um hier den gewünschten Kunststoff-Fluss zu ermöglichen.

Zudem kann durch den Steg 25 bewirkt werden, dass bei einer unerwünschten Druckerhöhung der Sollbruch-Wandbereich 17 nicht vollständig aus der Dichteinrichtung 10 herausbricht, sondern durch den Steg 25 an der Dichteinrichtung 10 gehalten wird. An der restlichen, die Schwächung 18 bildenden Nut kann das Material aufbrechen und der Druck entweichen.

## Patentansprüche

1. Wasserversorgungsvorrichtung, wobei
- eine Mischvorrichtung (1) mit einem Mischbehälter (3) vorgesehen ist, zum Durchmischen von in der Mischvorrichtung (1) geführtem Wasser in dem Mischbehälter (3);
- relativ zum Mischbehälter (3) eine Sockelvorrichtung (2) angeordnet ist, die eine Sockelkammer (9) aufweist, die in hydraulischer Verbindung zu einer Wasserleitung (11, 12, 13) der Wasserversorgungsvorrichtung steht und die eine Öffnung zur Umgebung hin aufweist;
- eine Dichteinrichtung (10) in die Sockelkammer (9) eingesetzt ist, zum Verschließen der Öffnung der Sockelkammer (9) gegenüber der Umgebung; und wobei
- die Dichteinrichtung (10) einen Sollbruch-Wandbereich (17) aufweist, der eine Druckfestigkeit aufweist, die niedriger ist als die Druckfestigkeit von Wandbereichen anderer Komponenten der Wasserversorgungsvorrichtung, die im Betriebszustand mit Wasser befüllbare Hohlräume umschließen, und die diese mit Wasser befüllbaren Hohlräume gegenüber der Umgebung abgrenzen;
**dadurch gekennzeichnet, dass**
- die Dichteinrichtung (10) eine Filteraufnahme (14) aufweist, zum Aufnehmen und Halten eines Wasserfilters.

2. Wasserversorgungsvorrichtung nach Anspruch 1, wobei
- die Sockelvorrichtung (2) einen Einlass (11) und einen Auslass (12) zum Durchführen von Wasser durch die Sockelkammer (9) aufweist;
- eine Filterkammer (15) vorgesehen ist, die in der Sockelvorrichtung (2) strömungsmäßig zwischen dem Einlass (11) und dem Auslass (12) angeordnet ist und einen Teil der Sockelkammer (9) bildet; und wobei
- die Filteraufnahme (14) derart in der Filterkammer (15) angeordnet ist, dass das von der Filteraufnahme (14) aufgenommene Wasserfilter in der Filterkammer (15) gehalten wird.

3. Wasserversorgungsvorrichtung nach Anspruch 1 oder 2, wobei der Sollbruch-Wandbereich (17) an die Filteraufnahme (14) angrenzend vorgesehen ist.

4. Wasserversorgungsvorrichtung nach einem der Ansprüche 1 bis 3, wobei
- die Dichteinrichtung (10) eine längliche Erstreckung aufweist und zusätzlich zu der Filteraufnahme (14) eine in Längsrichtung koaxial zu der Filteraufnahme (14) zur Umgebung hin offene Umgebungskammer (16) aufweist; und wobei
- der Sollbruch-Wandbereich (17) zwischen der Filteraufnahme (14) und der Umgebungskammer (16) angeordnet ist.

5. Wasserversorgungsvorrichtung nach einem der Ansprüche 1 bis 4, wobei
- die Filteraufnahme (14) eine zylindrische Form aufweist; und wobei
- der Sollbruch-Wandbereich (17) eine Stirnseite der Filteraufnahme (14) bildet.

6. Wasserversorgungsvorrichtung nach einem der Ansprüche 1 bis 5, wobei der Sollbruch-Wandbereich (17) eine Schwächung (18) in Form einer reduzierten Wandstärke gegenüber anderen die Filteraufnahme (14) bildenden Abschnitten aufweist.

7. Wasserversorgungsvorrichtung nach einem der Ansprüche 1 bis 6, wobei der Sollbruch-Wandbereich (17) eine Druckfestigkeit bis zu einem Druckbereich zwischen 2400 kPA und 3500 kPA aufweist.

8. Wasserversorgungsvorrichtung nach einem der vorstehenden Ansprüche, wobei
- der Sollbruch-Wandbereich (17) eine Schwächung (18) in Form einer reduzierten Wandstärke gegenüber anderen, die Dichteinrichtung (10) bildenden Abschnitten aufweist; und wobei
- die Schwächung (18) derart dimensioniert ist, dass die Schwächung (18) eine niedrigere Druckfestigkeit aufweist als alle anderen Wasser führenden Komponenten der Wasserversorgungsvorrichtung.

9. Wasserversorgungsvorrichtung nach Anspruch 8, wobei
- der Sollbruch-Wandbereich (17) ein Wandelement (26) aufweist;
und wobei
- die Schwächung (18) eine Nut aufweist, die das Wandelement (26) vollständig umläuft; oder
- die Schwächung (18) eine Nut aufweist, die das Wandelement (26) nur teilweise umläuft, derart, dass das Wandelement (26) über einen Steg (25) mit einem den Sollbruch-Wandbereich (17) umgebenden Bereich der Dichteinrichtung (10) verbunden ist.

## Claims

1. A water supply apparatus, wherein
- a mixing apparatus (1) is provided for mixing, in a mixing container (3), water carried in the mixing apparatus (1);
- relative to the mixing container (3), a base apparatus (2) is arranged which has a base chamber (9) that is hydraulically connected to a water conduit (11, 12, 13) of the water supply apparatus and which has an opening to the surroundings;
- a sealing device (10) is installed in the base chamber (9) for closing off the opening of the base chamber (9) from the surroundings; and wherein
- the sealing device (10) has a wall area with predetermined breaking point (17) which has a compressive strength that is lower than the compressive strength of wall areas of other components of the water supply apparatus which, in the operating state, enclose cavities that can be filled with water, and which separate these cavities that can be filled with water from the surroundings; **characterized in that**
- the sealing device (10) has a filter seat (14) to accommodate and hold a water filter.

2. The water supply apparatus according to claim 1, wherein
- the base apparatus (2) has an inlet (11) and an outlet (12) for routing water through the base chamber (9);
- a filter chamber (15) is provided which, in the base apparatus (2), is flow-wise arranged between the inlet (11) and the outlet (12) and forms part of the base chamber (9); and wherein
- the filter seat (14) is arranged within the filter chamber (15) in such a manner that the water filter accommodated by the filter seat (14) is held within the filter chamber (15).

3. The water supply apparatus according to claim 1 or 2, wherein the wall area with predetermined breaking point (17) is provided adjacent to the filter seat (14).

4. The water supply apparatus according to any one of claims 1 to 3, wherein
- the sealing device (10) has an elongated extension and has, additionally to the filter seat (14), an environmental chamber (16) open to the surroundings which is coaxial to the filter seat (14) in the longitudinal direction; and wherein
- the wall area with predetermined breaking point (17) is arranged between the filter seat (14) and the environmental chamber (16).

5. The water supply apparatus according to any one of claims 1 to 4, wherein
- the filter seat (14) has a cylindrical form; and wherein
- the wall area with predetermined breaking point (17) forms a front side of the filter seat (14).

6. The water supply apparatus according to any one of claims 1 to 5, wherein the wall area with predetermined breaking point (17) has a weakening (18) in the form of a reduced wall strength compared to other sections forming the filter seat (14).

7. The water supply apparatus according to any one of claims 1 to 6, wherein the wall area with predetermined breaking point (17) has a compressive strength of up to a pressure range between 2400kPA and 3500kPA.

8. The water supply apparatus according to any one of the preceding claims, wherein
- the wall area with predetermined breaking point (17) has a weakening (18) in the form of a reduced wall strength compared to other sections forming the sealing device (10); and wherein
- the weakening (18) is dimensioned in such a manner that the weakening (18) has a lower compressive strength than all other water carrying components of the water supply apparatus.

9. The water supply apparatus according to claim 8, wherein
- the wall area with predetermined breaking point (17) has a wall element (26); and wherein
- the weakening (18) has a groove which completely circulates the wall element (26); or
- the weakening (18) has a groove which circulates the wall element (26) only partially in such a manner that the wall element (26) is connected to an area of the sealing device (10) surrounding the wall area with predetermined breaking point (17) via a bar (25).

## Revendications

1. Dispositif d'alimentation en eau, dans lequel
- un dispositif de mélange (1) comprenant un réservoir de mélange (3) est prévu pour mélanger de l'eau menée dans le dispositif de mélange (1) dans le réservoir de mélange (3) ;
- un dispositif de socle (2) qui présente une chambre de socle (9) qui est en liaison hydraulique avec une conduite d'eau (11, 12, 13) du dispositif d'alimentation en eau et qui présente une ouverture vers l'environnement est agencé par rapport au réservoir de mélange (3) ;
- un équipement d'étanchéité (10) est inséré dans la chambre de socle (9) pour fermer l'ouverture de la chambre de socle (9) par rapport à l'environnement ; et dans lequel
- l'équipement d'étanchéité (10) présente une zone de paroi destinée à rompre (17) qui présente une résistance à la pression qui est plus faible que la résistance à la pression de zones de paroi d'autres composants du dispositif d'alimentation en eau qui entourent des cavités pouvant être remplies d'eau dans l'état de fonctionnement et qui délimitent ces cavités pouvant être remplies d'eau par rapport à l'environnement ;
**caractérisé en ce que**
- l'équipement d'étanchéité (10) présente un logement de filtre (14) pour recevoir et maintenir un filtre à eau.

2. Dispositif d'alimentation en eau selon la revendication 1, dans lequel
- le dispositif de socle (2) présente une entrée (11) et une sortie (12) pour faire passer de l'eau à travers la chambre de socle (9) ;
- une chambre de filtre (15) est prévue qui est agencée dans le dispositif de socle (2) en écoulement entre l'entrée (11) et la sortie (12) et forme une partie de la chambre de socle (9) ; et dans lequel
- le logement de filtre (14) est agencé dans la chambre de filtre (15) de telle manière que le filtre à eau reçu par le logement de filtre (14) soit maintenu dans la chambre de filtre (15).

3. Dispositif d'alimentation en eau selon la revendication 1 ou 2, dans lequel la zone de paroi destinée à rompre (17) est prévue de manière contiguë au logement de filtre (14).

4. Dispositif d'alimentation en eau selon l'une des revendications 1 à 3, dans lequel
- l'équipement d'étanchéité (10) présente une étendue oblongue et présente en plus du logement de filtre (14) une chambre d'environnement (16) ouverte vers l'environnement, coaxiale au logement de filtre (14) dans la direction longitudinale ;
et dans lequel
- la zone de paroi destinée à rompre (17) est agencée entre le logement de filtre (14) et la chambre d'environnement (16).

5. Dispositif d'alimentation en eau selon l'une des revendications 1 à 4, dans lequel
- le logement de filtre (14) présente une forme cylindrique ; et dans lequel
- la zone de paroi destinée à rompre (17) forme un côté avant du logement de filtre (14).

6. Dispositif d'alimentation en eau selon l'une des revendications 1 à 5, dans lequel la zone de paroi destinée à rompre (17) présente un affaiblissement (18) sous la forme d'une épaisseur de paroi réduite par rapport à d'autres sections formant le logement de filtre (14).

7. Dispositif d'alimentation en eau selon l'une des revendications 1 à 6, dans lequel la zone de paroi destinée à rompre (17) présente une résistance à la pression jusqu'à une plage de pression entre 2400 kPA et 3500 kPA.

8. Dispositif d'alimentation en eau selon l'une des revendications précédentes, dans lequel
- la zone de paroi destinée à rompre (17) présente un affaiblissement (18) sous la forme d'une épaisseur de paroi réduite par rapport à d'autres sections formant l'équipement d'étanchéité (10) ; et dans lequel
- l'affaiblissement (18) est dimensionné de telle manière que l'affaiblissement (18) présente une résistance à la pression plus faible que tous les autres composants menant de l'eau du dispositif d'alimentation en eau.

9. Dispositif d'alimentation en eau selon la revendication 8, dans lequel
- la zone de paroi destinée à rompre (17) présente un élément de paroi (26) ; et dans lequel
- l'affaiblissement (18) présente une rainure qui entoure complètement l'élément de paroi (26) ; ou
- l'affaiblissement (18) présente une rainure qui entoure seulement partiellement l'élément de paroi (26) de telle manière que l'élément de paroi (26) soit relié par le biais d'une nervure (25) à une zone entourant la zone de paroi destinée à rompre (17) de l'équipement d'étanchéité (10).
